Europäisches Patentamt

**European Patent Office**

**Office européen des brevets**

(19)

(11) Publication number: **0 105 041**
A2

(12)

# EUROPEAN PATENT APPLICATION

(21) Application number: **83850259.9**

(22) Date of filing: **29.09.83**

(51) Int. Cl.³: **B 29 F 1/02**

(30) Priority: **29.09.82 SE 8205560**

(43) Date of publication of application:
**04.04.84 Bulletin 84/14**

(84) Designated Contracting States:
**DE FR GB IT SE**

(71) Applicant: **Baumer, Stig**
**P.O. Box 44**
**S-350 75 Alstermo(SE)**

(72) Inventor: **Baumer, Stig**
**P.O. Box 44**
**S-350 75 Alstermo(SE)**

(74) Representative: **Moberg, Sture et al,**
**STURE V MOBERG AB Kungstensgatan 48**
**S-113 59 Stockholm(SE)**

(54) **Plastifying screw.**

(57) A tip (1) of a back flow lock disposed in the mouth of a plastifying screw (3) of an injection moulding machine for plastic, which tip (1) has a securing end (2) which is screwed into the end of the plastifying screw (3).

The securing end (2) of the tip (1) has a central axial bore (5) which may serve as a start point for a drill for making a bore wherein a screw extractor or the like may be applied.

Croydon Printing Company Ltd.

## A tip for a plastifying screw.

The present invention relates to a tip for a plastifying screw of the kind which is defined in the preamble of claim 1.

The tip of the plastifying screw of an injection moulding machine is subjected to great stresses and it is not too unusual that it is broken due to fatigue before it is ready to be replaced due to wearing down. There are also other reasons for the tip to be broken, e.g. that the plastifying screw is started before the material is soft enough. In most cases the point of fracture is exactly where the tip is screwed into to plastifying screw.

When the tip of a plastifying screw is broken it is for many reasons very difficult to remove the remaining part from the plastifying screw. This is due to the fact that a central bore has to be made in the remaining portion of the tip to permit insertion of a screw extractor by means of which the remaining portion could be screwed out.

The bore which has to be done must be located as centrally as possible, and thereby it is very difficult to achieve a satisfactorily central start point for a drill e.g. by making a punch mark. There are also other difficulties with respect to making a central bore for a screw extractor.

The above mentioned problems are avoided by designing the tip according to the invention so as defined in the characterizing clause of claim 1. If desired, the tip may already from the beginning be provided with a central axial bore having a diameter adapted to a screw extractor of a size suitable for the tip dimension in question, so that a screw extractor may be used directly upon a possible brake of the tip.

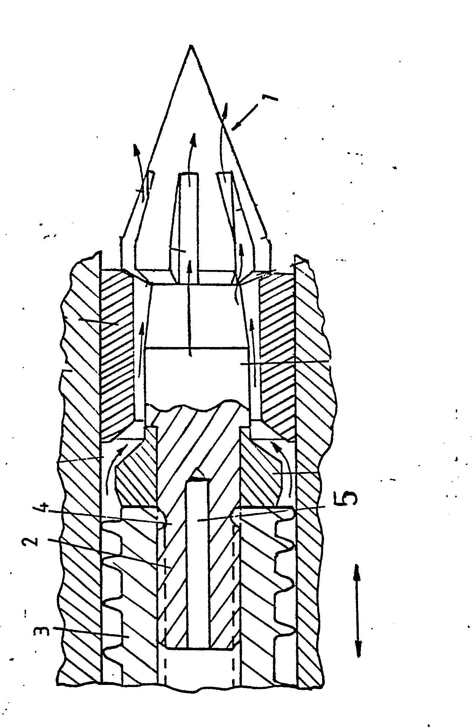

The invention will be disclosed in more details below with reference to the accompanying drawing wherein the figure shows a side-view, partly in section, of one embodiment of the tip according to the invention.

2

In the drawing there is shown a tip 1, the rear end 2 of which is cylindrical and has threads. This end is screwed in into a plastifying screw 3.

The forces to which the tip is subjected are so great that the tip has a tendency to break exactly at the throat portion 4 at the junction to the plastifying screw 3. To permit an easy removal of the portion of the tip which remains in the feeding screw 3 the end 2 is provided with a central bore 5. The bottom of the bore 5 is situated ahead of the throat portion 4. In the drawing the bore is shown as having a rather great diameter so that, if the tip should be broken, a screw extractor may be inserted directly.

However, a bore weakens the tip and therefore the tip is preferably provided with only a small bore which thus may serve as a start for the tip of a drill of a sufficiently great diameter.

Claims.

1.  A tip of a plastifying screw in an injection moulding machine for plastic, which tip (1) has a securing end (2) which is screwed into the end of the plastifying screw (3), <u>characterized in</u> that the securing end (2) of the tip has one or more axial bores (5) for engagement by a tool.

2.  A tip as defined in claim 1, <u>characterized in</u> that it is provided with one single, central, axial bore (5).

3.  A tip as claimed in claim 2, <u>characterized in</u> that the axial bore (5) terminates short ahead of the securing end (2) as seen in direction towards the outermost end of the tip.